Europäisches Patentamt

European Patent Office

Office européen des brevets

(19)

(11) Veröffentlichungsnummer: **0 062 290**
**B1**

(12) # EUROPÄISCHE PATENTSCHRIFT

(45) Veröffentlichungstag der Patentschrift:
**23.01.85**

(51) Int. Cl.⁴: **A 23 K 3/04, A 23 K 3/03**

(21) Anmeldenummer: **82102692.9**

(22) Anmeldetag: **31.03.82**

(54) **Verfahren zur Konservierung von Pressschnitzeln aus der Zuckerrübenverarbeitung.**

(30) Priorität: **02.04.81 DE 3113245**

(73) Patentinhaber: **HOECHST AKTIENGESELLSCHAFT, Postfach 80 03 20, D-6230 Frankfurt am Main 80 (DE)**

(43) Veröffentlichungstag der Anmeldung:
**13.10.82 Patentblatt 82/41**

(72) Erfinder: **Lück, Erich, Dr., Völklinger Weg 34, D-6000 Frankfurt am Main 71 (DE)**
Erfinder: **Remmert, Karlheinz, Krifteler Strasse 3, D-6238 Hofheim am Taunus (DE)**

(45) Bekanntmachung des Hinweises auf die Patenterteilung:
**23.01.85 Patentblatt 85/4**

(84) Benannte Vertragsstaaten:
**AT BE DE FR GB IT NL**

(56) Entgegenhaltungen:
**CH - A - 291 749**
**DE - C - 210 554**
**GB - A - 1 091 264**
**GB - A - 1 452 169**

BUNDESDRUCKEREI BERLIN

## Beschreibung

Die Erfindung betrifft ein Verfahren zur Konservierung von Preßschnitzeln aus der Zuckerrübenverarbeitung mit einem Wassergehalt von weniger als 80 Gew.-%.

Bei der Herstellung von Zucker (Saccharose) aus Zuckerrüben verbleiben als Rückstand sogenannte Rübenschnitzel. Diese enthalten neben kleinen Mengen an Zucker ernährungsphysiologisch wertvolle Bestandteile. Aus diesem Grunde werden sie seit langem als Viehfutter verwendet.

Der Wassergehalt der bei der Zuckerherstellung zunächst anfallenden sogenannten Naßschnitzel liegt bei etwa 90%. Naßschnitzel unterliegen wegen dieses hohen Wassergehalts einem rachen mikrobiellen Verderb. Durch starkes Pressen läßt sich der Wassergehalt auf unter 80% senken. Die so erhaltenen sogenannten Preßschnitzel sind aber nur wenig besser haltbar als die Naßschnitzel, weil auch bei den Preßschnitzeln die Wasseraktivität immer noch bei ca. 0,95 liegt. Aus der Konservierungspraxis weiß man, daß Lebensmittel und Futtermittel mit solch hohen Wasseraktivitäten sehr anfällig gegen mikrobiologischen Verderb sind. Dies gilt ganz besonders für den relativ hohen pH-Bereich, den die Rübenschnitzel von Natur aus aufweisen.

Das Problem der Verwertung von Rübenschnitzeln als Viehfutter wird noch dadurch vergrößert, daß Rübenschnitzel nur während der Kampagne anfallen, d. h. innerhalb weniger Wochen im Jahr. Sie müssen gerade in einer Zeit weiterverarbeitet werden, in der die Zuckerfabriken besonders stark mit anderen Arbeiten beschäftigt sind.

Es besteht zwar die Möglichkeit, die Schnitzel sofort nach ihrem Anfall an die Landwirte weiterzugeben; diese müssen die Schnitzel dann aber unmittelbar verfüttern. Eine derartige Verwertung der Rübenschnitzel kommt außerdem nur während der Kampagne in Frage und ist auch nur in unmittelbarer Nähe der Zuckerfabriken möglich.

Ein bekanntes und weithin angewandtes Verfahren, die Preßschnitzel auf physikalischem Wege haltbar zu machen, ist die Trocknung. Man trocknet die Preßschnitzel in rotierenden Trommeltrocknern auf einen Wassergehalt von 10%, wodurch sie monatelang haltbar werden. Dieses Verfahren verlangt jedoch einen erheblichen Energieaufwand. Durch die in letzter Zeit stark gestiegenen Kosten für Heizöl wird die Trocknung der Rübenschnitzel immer unwirtschaftlicher.

Wegen dieser Schwierigkeiten ist versucht worden, die Preßschnitzel auf chemischem Wege zu konservieren, also durch Zusatz sogenannter Konservierungsstoffe. Dabei hat man zwischen Stoffen zu unterscheiden, welche (ähnlich wie die Trocknung) durch Senkung der Wasseraktivität wirken, und Konservierungsstoffen im engeren Sinne, die einen direkten hemmenden oder abtötenden Einfluß auf die Mikroorganismen haben. Zu den durch Senkung der Wasseraktivität wirkenden Stoffen, die an sich zur Konservierung von Preßschnitzeln brauchbar wären und zum Teil auch angewendet werden, gehören Glykole, Melasse und Kochsalz. Alle diese Stoffe wirken jedoch erst in relativ hohen Mengen, die entweder wirtschaftlich nicht tragbar sind oder aber, wie z. B. Kochsalz, die Tiere in unerwünschtem Maße belasten. In der Praxis verwendet man deshalb durch Senkung der Wasseraktivität wirkende Zusätze allenfalls zusammen mit anderen Verfahren und Stoffen.

Die Silierung läßt sich ebenfalls zu den chemischen Konservierungsverfahren zählen. Sie hat auf dem Gebiet von Preßschnitzelkonservierung eine gewisse Bedeutung. Allerdings hat sie den Nachteil, daß es oft wegen der in kurzer Zeit anfallenden großen Schnitzelmengen an Silokapazität fehlt. Ein »Ersatz« der Silierung durch Zusatz der Mineralsäuren mit dem Ziel, durch starke pH-Absenkung das Wachstum von Mikroorganismen stark einzuschränken oder ganz zu unterbinden, kommt kaum in Betracht, weil die Tiere ein Futtermittel mit sehr niedrigem pH-Wert ungern akzeptieren.

Ameisensäure ist ohne zusätzliche Silierung für die Preßschnitzelkonservierung ungeeignet. Sie wirkt nämlich nur im stark sauren Bereich, der bei Preßschnitzeln nicht gegeben ist. Man könnte Ameisensäure zwar sehr hoch dosieren und dadurch den pH-Wert senken, dadurch würde dieser Konservierungsstoff aber unwirtschaftlich. Außerdem dürften die Tiere Preßschnitzel mit hohem Gehalt an Ameisensäure ablehnen, weil Ameisensäure aufgrund ihres hohen Dampfdruckes relativ flüchtig ist und dem Futtermittel einen stechenden Geruch verleiht.

Für die Konservierung von Preßschnitzeln ungeeignet sind weiterhin die aus der Konservierung von Feuchtgetreide bekannten Stoffe Ammoniak, Harnstoff und Natriumnitrit. Entweder haben sie gegen Schimmelpilze keine ausreichende Wirkung, oder sie sind aus Umweltgründen (Geruchsbelästigung) oder aus toxikologischen Erwägungen für die Konservierung von Preßschnitzeln nicht brauchbar.

Propionsäure hat sich ebenfalls nicht als Konservierungsstoff für Preßschnitzel einführen können, obwohl dieser Konservierungsstoff bei Futtergetreide, Mischfutter und anderen Futtermitteln gut brauchbar ist. Das Problem bei der Konservierung von Preßschnitzeln mit Propionsäure liegt darin, daß bei der Verarbeitungstemperatur der Preßschnitzel hohe Verdampfungsverluste an Propionsäure auftreten, die ihre Anwendung unwirtschaftlich machen. Propionsäure ist bislang nur zur Behandlung der Oberfläche von Preßschnitzeln empfohlen worden, wenn man diese danach mit Folien abdeckt. Ein solches Anwendungsverfahren ist aber umständlich.

Ideal wäre eine chemische Konservierung der Preßschnitzel in der Fabrik, die eine offene Lagerung unter den bei Trockenschnitzeln üblichen Bedingungen für mindestens einige Wochen möglich macht (E. Thier, Zuckerindustrie 106, 60−65 (1981)).

Diesem Ideal kommt am nächsten die Sorbinsäure, die wegen ihrer starken Wirkung gegen Schim-

melpilze zur Konservierung von vielen Futtermitteln gut geeignet ist. Sorbinsäure hat dennoch bei Preßschnitzeln nur eine beschränkte Brauchbarkeit. Dies liegt an dem hohen pH-Wert der Preßschnitzel und den starken Nachinfektionen während der Verarbeitung und Verteilung der Preßschnitzel. Sorbinsäure müßte in hohen Anwendungskonzentrationen benutzt werden, was wegen des relativ hohen Preises der Sorbinsäure und des relativ geringen Wertes der Preßschnitzel unwirtschaftlich wäre.

Es wurde nun gefunden, daß sich Sorbinsäure und deren Salze in Kombination mit wasserlöslichen und physiologisch unbedenklichen anorganischen Säuren oder deren sauren Salzen besonders gut zur Konservierung von Rübenpreßschnitzeln eignen. Das erfindungsgemäße Verfahren zur Konservierung von Preßschnitzeln aus der Zuckerrübenverarbeitung mit einem Wassergehalt von weniger als 80 Gew.-% ist dadurch gekennzeichnet, daß man die Preßschnitzel mit zwei Komponenten vermischt, wobei als erste Komponente mindestens eine Verbindung der aus Sorbinsäure und den Sorbaten bestehenden Verbindungsklasse eingesetzt wird, und zwar in einer Menge von $2 \cdot 10^{-4}$ bis $5 \cdot 10^{-3}$ Mol pro 100 g unkonservierte Preßschnitzel, und wobei als zweite Komponente mindestens eine Verbindung der aus wasserlöslichen und physiologisch unbedenklichen anorganischen Säuren und ihren sauren Salzen bestehenden Verbindungsklasse eingesetzt wird, und zwar in einer solchen Menge, daß die Mischung aus den Preßschnitzeln und den zwei Komponenten einen pH-Wert von höchstens 5,8 hat. Dabei eignet sich eine Sorbinsäure mit einer Korngröße unter 300 μm besonders gut; eine Untergrenze für die Korngröße ergibt sich höchstens darin, daß eine zu feine Sorbinsäure zu stark stäubt.

Als erste Komponente wird Sorbinsäure oder ein oder mehrere Sorbate oder ein Gemisch aus Sorbinsäure oder mehreren Sorbaten benutzt, vorzugsweise Sorbinsäure oder Kaliumsorbat. Die Menge der ersten Komponente beträgt $2 \cdot 10^{-4}$ bis $5 \cdot 10^{-3}$ Mol, vorzugsweise $5 \cdot 10^{-4}$ bis $1,5 \cdot 10^{-3}$ Mol, pro 100 g unkonservierte Preßschnitzel. Falls man Sorbinsäure als erste Komponente einsetzt, wäre also die Menge in Gewichtsprozent etwa 0,022 bis 0,56%, vorzugsweise etwa 0,056 bis 0,17%, bezogen auf unkonservierte Preßschnitzel.

Als zweite Komponente wird eine wasserlösliche und physiologisch unbedenkliche anorganische Säure oder ein oder mehrere saure Salze derartiger Säuren oder ein Gemisch aus einer derartigen Säure mit einem oder mehreren sauren Salzen derartiger Säuren benutzt. Geeignet sind z. B. Orthophosphorsäure, Salzsäure, Schwefelsäure, saure Salze der Orthophosphorsäure, Hydrogensulfate, Hydrogensulfite. Vorzugsweise verwendet man Orthophosphorsäure, deren saure Salze, Hydrogensulfate oder Hydrogensulfite. Besonders bevorzugt sind Orthophosphorsäure und Natriumhydrogenphosphat. Die Menge der zweiten Komponente ist so zu bemessen, daß die Mischung aus den Preßschnitzeln und den zwei Komponenten einen pH-Wert von höchstens 5,8 hat. Nach unten ist der pH-Wert dadurch begrenzt, daß ein zu stark sauer schmeckendes Futter von den Tieren nicht mehr akzeptiert wird. Wo die Untergrenze liegt, kann jedenfalls im Einzelfall leicht ermittelt werden. Falls man 75gew.-prozentige Orthophosphorsäure einsetzt, verwendet man im allgemeinen etwa 0,1 bis 2 Gew.-%, vorzugsweise 0,3 bis 0,6 Gew.-%, bezogen auf unkonservierte Preßschnitzel.

Es ist grundsätzlich bekannt, daß die Wirkung von Sorbinsäure und deren Salzen durch Zusatz von Säuren oder sauer wirkenden Salzen verbessert wird. Sorbinsäure wirkt nämlich nur in undissoziierter Form. Überraschenderweise ist jedoch der Zusatz von anorganischen Säuren und deren sauren Salzen sehr viel wirksamer als etwa der Zusatz von Citronensäure oder Weinsäure, obwohl sich mit den beiden letztgenannten Säuren in den Preßschnitzeln ein ähnlich niedriger pH-Wert einstellen läßt wie mit den erfindungsgemäß zu verwendenden anorganischen Säuren oder deren sauren Salzen.

Der bei der Verwendung der erfindungsgemäßen Kombination der Sorbinsäure oder der Sorbate mit sauren Verbindungen zu erreichende konservierende Effekt ist wesentlich größer als aufgrund der bekannten Wirkungen der Einzelkomponenten zu erwarten war.

Die beiden erfindungsgemäß zu verwendenden Komponenten werden gemeinsam oder der Reihe nach mit den Preßschnitzeln vermischt, am geeignetsten, wenn diese noch heiß sind.

Das erfindungsgemäße Konservierungsverfahren ist wirtschaftlicher als die Trocknung. Auch können die erfindungsgemäß konservierten Preßschnitzel später siliert werden, denn die Konservierungsstoffkombination stört die Säurebildung bei der Silierung nicht.

Die erfindungsgemäß konservierten Preßschnitzel werden von Kühen und anderen Nutztieren geschmacklich akzeptiert.

Die in den folgenden Beispielen und Vergleichsbeispielen angegebenen Prozente sind stets Gewichtsprozente.

Vergleichsbeispiel 1

Noch heiße Preßschnitzel mit einem Wassergehalt von etwa 75% wurden in einem Mischer mit den in der Tabelle aufgeführten Konservierungsstoffen versetzt; die flüssigen Säuren wurden durch Sprühen aufgebracht, die festen Stoffe einfach eingemischt. Die konservierten Preßschnitzel wurden in halb gefüllten Glasflaschen und Foliensäcken tagsüber bei Zimmertemperatur, nachts bei 12—15° C gelagert. Durch die Lagerung bei unterschiedlichen Temperaturen bildete sich Kondenswasser, das

0 062 290

für die Haltbarkeit erfahrungsgemäß ungünstig ist. Es ergaben sich folgende Haltbarkeiten:

| Konservierungsstoff | Zeit bis zum Auftreten von sichtbarem Schimmelbefall oder Gasbildung |
| --- | --- |
| —      (Kontrollversuch) | 3 Tage |
| 0,8% Harnstoffphosphat | 6 Tage |
| 0,4% Natriumhydrogensulfit | 6 Tage |
| 0,4% Natriumhydrogensulfat | 6 Tage |
| 0,3% 75%ige Phosphorsäure | 5 Tage |
| 0,5% Citronensäure | 3 Tage |
| 0,4% Weinsäure | 3 Tage |
| 0,1% Sorbinsäure | 13 Tage |
| 0,2% Sorbinsäure | 20 Tage |
| 0,1% Kaliumsorbat | 10 Tage |

## Vergleichsbeispiel 2

Noch heiße Preßschnitzel wurden mit folgenden Konservierungsmischungen analog zu Vergleichsbeispiel 1 behandelt. Es ergaben sich folgende Haltbarkeiten:

| Konservierungsmischung | Zeit bis zum Auftreten von sichtbarem Schimmelbefall oder Gasbildung |
| --- | --- |
| — (Kontrollversuch) | 4 Tage |
| 0,1% Sorbinsäure + 0,5% Harnstoff | 14 Tage |
| 0,1% Sorbinsäure + 1,0% Harnstoff | 14 Tage |
| 0,1% Sorbinsäure + 0,3% Citronensäure | 16 Tage |
| 0,1% Sorbinsäure + 0,5% Citronensäure | 22 Tage |
| 0,1% Sorbinsäure + 0,3% Weinsäure | 16 Tage |
| 0,1% Sorbinsäure + 0,5% Weinsäure | 22 Tage |

Beispiel 1

Noch heiße Preßschnitzel wurden mit folgenden Konservierungsmischungen analog zu Vergleichsbeispiel 1 behandelt. Es ergaben sich folgende Haltbarkeiten:

| Konservierungsmischung | Zeit bis zum Auftreten von sichtbarem Schimmelbefall oder Gasbildung |
| --- | --- |
| 0,1% Sorbinsäure + 0,3% 75%ige Phosphorsäure | mehr als 3 Monate |
| 0,1% Sorbinsäure + 0,5% 75%ige Phosphorsäure | mehr als 3 Monate |
| 0,1% Sorbinsäure + 1% Harnstoffsäure | mehr als 3 Monate |
| 0,1% Sorbinsäure + 0,4% Natriumhydrogensulfat | mehr als 3 Monate |
| 0,1% Sorbinsäure + 0,4% Natriumhydrogensulfit | mehr als 3 Monate |

Beispiel 2

Noch heiße Preßschnitzel wurden mit folgenden Konservierungsmischungen analog zu Vergleichsbeispiel 1 behandelt. Es ergaben sich folgende Haltbarkeiten:

| Konservierungsmischung | | Zeit bis zum Auftreten von sichtbarem Schimmelbefall oder Gasbildung |
| --- | --- | --- |
| 0,1% Sorbinsäure | + 0,3% 75%ige Phosphorsäure + 0,1% Natriumhydrogensulfat | mehr als 3 Monate |
| 0,1% Sorbinsäure | + 0,3% 75%ige Phosphorsäure + 0,1% Natriumhydrogensulfit | mehr als 3 Monate |
| 0,1% Sorbinsäure | + 0,3% 75%ige Phosphorsäure + 0,5% Harnstoffphosphat | mehr als 3 Monate |
| 0,1% Kaliumsorbat | + 0,3% 75%ige Phosphorsäure + 0,1% Natriumhydrogensulfit | mehr als 3 Monate |
| 0,05% Sorbinsäure | + 0,6% 75%ige Phosphorsäure + 0,1% Natriumhydrogensulfit | 2 Monate |

**Patentansprüche**

1. Verfahren zur Konservierung von Preßschnitzeln aus der Zuckerrübenverarbeitung mit einem Wassergehalt von weniger als 80 Gew.-%, dadurch gekennzeichnet, daß man die Preßschnitzel mit zwei Komponenten vermischt, wobei als erste Komponente mindestens eine Verbindung der aus Sorbinsäure und den Sorbaten bestehenden Verbindungsklasse eingesetzt wird, und zwar in einer Menge von $2 \cdot 10^{-4}$ bis $5 \cdot 10^{-3}$ Mol pro 100 g unkonservierte Preßschnitzel, und wobei als zweite Komponente mindestens eine Verbindung der aus wasserlöslichen und physiologisch unbedenklichen anorganischen Säuren und ihren sauren Salzen bestehenden Verbindungsklasse eingesetzt wird, und zwar in einer solchen Menge, daß die Mischung aus den Preßschnitzeln und den zwei Komponenten einen pH-Wert von höchstens 5,8 hat.

2. Verfahren nach Anspruch 1, dadurch gekennzeichnet, daß man als erste Komponente Sorbinsäure mit einer Korngröße unter 300 μm einsetzt.

3. Verfahren nach Anspruch 1 oder 2, dadurch gekennzeichnet, daß man als erste Komponente Sorbinsäure oder Kaliumsorbat einsetzt.

4. Verfahren nach einem der Ansprüche 1 bis 3, dadurch gekennzeichnet, daß man als zweite Komponente Orthophosphorsäure, deren saure Salze, Hydrogensulfate oder Hydrogensulfite einsetzt.

5. Verfahren nach einem der Ansprüche 1 bis 3, dadurch gekennzeichnet, daß man als zweite Komponente Orthophosphorsäure oder Natriumhydrogenphosphat einsetzt.

6. Verfahren nach einem der Ansprüche 1 bis 5, dadurch gekennzeichnet, daß die Menge der ersten Komponente 5 · 10$^{-4}$ bis 1,5 · 10$^{-3}$ Mol pro 100 g unkonservierte Preßschnitzel beträgt.

**Claims**

1. A process for preserving pelletized chips which are obtained in the processing of sugar beet and have a water content of less than 80% by weight, which process is characterized by mixing the pelletized chips with two components, at least one compound from the class of compounds comprising sorbic acid and sorbates being employed as the first component, namely in an amount of $2 \times 10^{-4}$ to $5 \times 10^{-3}$ mole per 100 g of unpreserved pelletized chips, and at least one compound from the class of compounds comprising water soluble and physiologically unobjectionable inorganic acids and their acid salts being employed as the second component, namely in an amount which is such that the mixture of pelletized chips and the two components has a pH value of at most 5.8.

2. The process as claimed in claim 1, wherein sorbic acid having a particle size of less than 300 µs is employed as the first component.

3. The process as claimed in claim 1 or 2, wherein sorbic acid or potassium sorbate is employed as the first component.

4. The process as claimed in any of claims 1 to 3, wherein orthophosphoric acid, acid salts thereof, hydrogen sulfates or hydrogen sulfites are employed as the second component.

5. The process as claimed in any of claims 1 to 3, wherein orthophosphoric acid or sodium hydrogen phosphate is employed as the second component.

6. The process as claimed in any of claims 1 to 5, wherein the amount of the first component is $5 \times 10^{-4}$ to $1.5 \times 10^{-3}$ mole per 100 g of unpreserved pelletized chips.

**Revendications**

1. Procédé de conservation de pulpes pressés provenant du traitement des betteraves à sucre et ayant une teneur en eau inférieure à 80% en poids, procédé caractérisé en ce qu'on mélange aux pulpes pressées deux composants en utilisant comme premier composant au moins un composé de la classe des composés consistant en l'acide sorbique et les sorbates, que l'on utilise en une quantité de 2 · 10$^{-4}$ à 5 · 10$^{-3}$ mole pour 100 g de pulpes pressées sans agents de conservation, et en utilisant comme second composant au moins un composé de la classe des composés consistant en des acides minéraux et leurs sels acides hydrosolubles et sans inconvénients physiologiques, que l'on utilise en une quantité telle que le mélange des pulpes pressées et des deux composants possède un pH de 5,8 au maximum.

2. Procédé selon la revendication 1, caractérisé en ce qu'on utilise comme premier composant de l'acide sorbique ayant une grosseur de grains inférieure à 300 µm.

3. Procédé selon la revendication 1 ou 2, caractérisé en ce qu'on utilise comme premier composant de l'acide sorbique ou du sorbate de potassium.

4. Procédé selon l'une des revendications 1 à 3, caractérisé en ce qu'on utilise comme second composant de l'acide orthophosphorique, ses sels acides, des hydrogénosulfates ou des hydrogénosulfites.

5. Procédé selon l'une des revendications 1 à 3, caractérisé en ce qu'on utilise comme second composant de l'acide orthophosphorique ou de l'hydrogénophosphate de sodium.

6. Procédé selon l'une des revendications 1 à 5, caractérisé en ce que la quantité du premier composant est de 5 · 10$^{-4}$ à 1,5 · 10$^{-3}$ mole pour 100 g de pulpes pressées sans agents de conservation.